(19)

Europäisches
Patentamt
European
Patent Office
Office européen
des brevets

(11) **EP 2 552 027 B1**

(12) **EUROPEAN PATENT SPECIFICATION**

(45) Date of publication and mention
of the grant of the patent:
**24.06.2015 Bulletin 2015/26**

(51) Int Cl.:
*H04B 1/16* (2006.01)

(21) Application number: **11175187.1**

(22) Date of filing: **25.07.2011**

(54) **Stereo decoding**

Stereo-Decodierung

Décodage stéréo

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.01.2013 Bulletin 2013/05**

(73) Proprietor: **Harman Becker Automotive Systems
GmbH
76307 Karlsbad (DE)**

(72) Inventors:
• **Gierl, Stefan
76133 Karlsruhe (DE)**

• **Benz, Christoph
77797 Ohlsbach (DE)**
• **Körner, Andreas
76337 Waldbronn (DE)**
• **Becker, Karl-Anton
76307 Karlsbad (DE)**

(74) Representative: **Westphal, Mussgnug & Partner
Patentanwälte mbB
Herzog-Wilhelm-Strasse 26
80331 München (DE)**

(56) References cited:
**WO-A1-2008/087577     DE-A1- 4 445 983
US-A1- 2007 058 817     US-B1- 7 046 811**

Printed by Jouve, 75001 PARIS (FR)

**Description**

BACKGROUND

1. Field Of Technology

The invention relates to a method and system of decoding a stereo multiplex signal that comprises a sum signal (L+R) and a difference signal (L-R) of a left stereo signal (L) and a right stereo signal (R).

2. Related Art

A standard baseband stereo multiplex signal such as used in frequency modulated (FM) radio broadcast systems, comprises sum and difference signals of left and right stereophonic (stereo) signals L and R, respectively. The sum signal (L+R) in its baseband frequency range is located in a frequency range from 0 to 15 kHz, and the difference signal, being double sideband amplitude-modulated on a suppressed sub-carrier of 38 kHz, covers a frequency range of 23 to 53 kHz. The amplitude level of each of both sideband difference signals (L-R) corresponds to half of the amplitude level of the sum signal (L+R), this 1:2 ratio also being referred to as -6 dB difference. The stereo multiplex signal also comprises a 19 kHz stereo pilot signal which serves as a reference frequency during the regeneration of a local 38 kHz mixing carrier. At the receiver's end, the synchronous demodulation of the modulated difference signal (L-R) into baseband compensates for this difference in amplitude level, which allows to properly disentangle these signals in the disentanglement unit into baseband stereo left and stereo right signals L and R, respectively.
Due to reception interference, such as adjacent channel interference, multi-path interference or the like, the difference signal (L-R) which is modulated with the 38 kHz carrier (subcarrier) signal is more distorted than the baseband sum signal (L+R) (the upper sideband is most affected). However, at the outputs of the disentanglement unit the distortions appear in both the stereo left and stereo right signals L and R since
L = 0.5((L+R)+(L-R)) and R = 0.5((L+R)-(L-R)).
A common approach to reducing or suppressing reception interference is to switch to a monaural reproduction mode if the signal quality of the stereo multiplex signal falls below a certain level. In the monaural reproduction mode, the less distorted sum signal (L+R) is reproduced on both channels to the effect that the aural impression of a listener deteriorates.
International application WO 2008/087577 A discloses a system and method in which the difference signal is reconstructed from the sum signal using a prediction factor, which is an estimation of the relation between the difference signal and the sum signal. The prediction factor depends on a measure of similarity between the sum signal and the difference signal in a frequency range comprising that frequency. Use is made of the fact that the relation between the difference signal and the sum signal is relatively frequency independent. Even if the difference signal has a relatively strong noise component the said relation can be estimated relatively accurately by calculating an average over a range of frequencies. The average is calculated for a plurality of frequency ranges. Further improvements in the signal quality of decoded stereo signals are desirable.

SUMMARY

A method and apparatus of decoding a stereo multiplex signal that comprises a sum signal (L+R) and a difference signal (L-R) of a left stereo signal (L) and a right stereo signal (R) are described herein. The method and apparatus include converting the stereo multiplex signal into the
sum signal (L+R) and the difference signal (L-R);
calculating first and second transfer functions from the sum signal (L+R) and the difference signal (L-R);
filtering the sum signal (L+R) according to the first transfer function to provide the left stereo signal (L);
and filtering the sum signal (L+R) according to the second transfer function to provide the right stereo signal (R).

BRIEF DESCRIPTION OF THE DRAWINGS

These and other objects, features and advantages of the present invention will become apparent in light of the detailed description of the best mode embodiment thereof, as illustrated in the accompanying drawings. In the figures, like reference numerals designate corresponding parts.

FIG. 1 is a block diagram of a novel stereo decoding apparatus;

FIG. 2 is a block diagram of a receiver system employing the novel decoding in a serial structure;

FIG. 3 is a block diagram of a receiver system employing the novel decoding in a parallel structure;

FIG. 4 is a block diagram of a receiver system employing the novel decoding in connection with spectral subtraction; and

FIG. 5 is a block diagram of a receiver system employing the novel decoding in connection with enhanced intermediate signal processing.

DETAILED DESCRIPTION

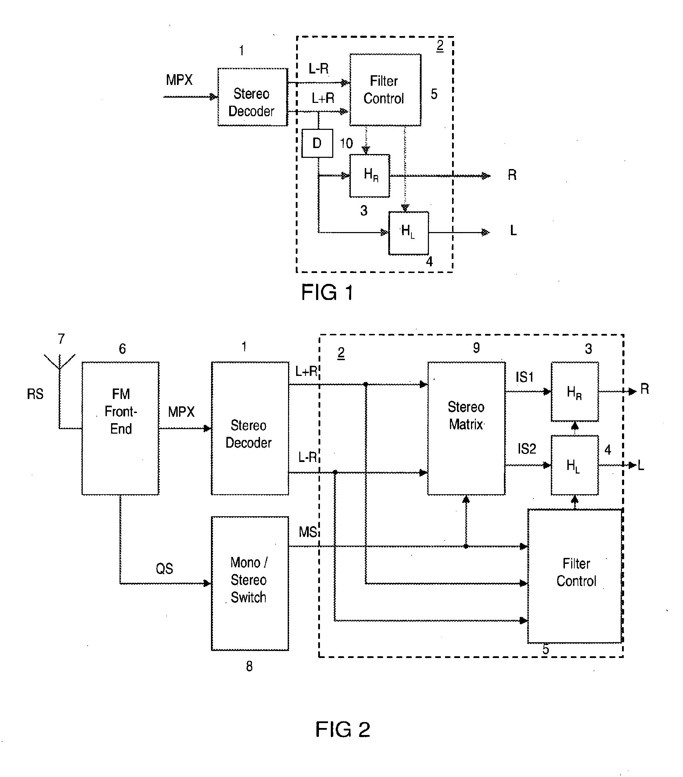

FIG. 1 shows a stereo decoding apparatus in which a multiplex signal, which in the given case is a baseband stereo multiplex signal MPX, is supplied to an arrangement for decoding a stereo multiplex signal, hereinafter being referred to as stereo decoder 1. The stereo multiplex signal MPX comprises baseband sum and difference signals (L+R) and (L-R) of left and right stereophonic signals L and R, respectively, the sum signal (L+R) being located in a frequency range from 0 to 15 kHz, the difference signal (L-R) being double sideband amplitude modulated (AM) on a suppressed sub-carrier of 38 kHz and covering a frequency range of 23 to 53 kHz. The amplitude level of the two sideband difference signals (L-R) corresponds to half of the amplitude level of the sum signal (L+R). The stereo multiplex signal MPX also comprises a 19 kHz stereo pilot signal which serves as a reference frequency during the regeneration of a local 38 kHz mixing carrier. The stereo multiplex signal MPX is coupled through parallel stereo sum and difference signal paths to a disentanglement unit 2. A low pass filter (not shown) is included in the sum signal path preceding the first input SI of the disentanglement unit 2 for selection of the baseband sum signal (L+R). The stereo decoder 1 generates the sum signal L+R and the difference signal L-R from the stereo multiplex signal MPX.

The disentanglement unit 2 includes two controllable filters 3, 4 and a filter controller 5. The two controllable filters 3, 4 each have a transfer function $H_R$ or $H_L$, respectively, and are supplied with the sum signal L+R from the stereo decoder 1, to which their inputs are connected. The filter controller 5, which is connected to filters 3, 4 and stereo decoder 1 calculates, e.g., filter coefficients for the filters 3, 4 from the sum signal L+R and the difference signal L-R and supplies the coefficients to the filters 3, 4 in order to control their transfer functions $H_R$ and $H_L$ such that filter 3 filters out the signal R and filter 4 filters out the signal L from the sum signal L+R. The filter controller 5 together with the controlled filters 3 and 4 may form, e.g., two adaptive filters.

Accordingly, the stereo decoding apparatus shown in FIG. 1 decodes the stereo multiplex signal MPX that includes the sum signal L+R and a difference signal L-R of the left stereo signal L and the right stereo signal R by converting the stereo multiplex signal MPX into the sum signal L+R and the difference signal L-R; calculating the transfer functions $H_R$ and $H_L$ from the sum signal L+R and the difference signal L-R; and filtering the sum signal L+R according to the transfer function $H_L$ to provide the left stereo signal L and according to the second transfer function $H_R$ to provide the right stereo signal R.

In particular when signal quality is low, the stereo information contained in the multiplex signal MPX may be extracted from the sum (L+R) and difference (L-R) signal by using correlation functions or the related power density spectra as a basis to calculate the transfer functions $H_R$ and $H_L$ from the sum signal L+R and the difference signal L-R. It is assumed that

x(t) represents the sum signal L+R and y(t) represents the difference signal L-R;

X(f) and Y(f) are the signal spectra of x(t) and y(t), respectively;

$l_{xx}(\tau)$ and $l_{yy}(\tau)$ are the auto-correlation functions of x(t) and y(t), respectively;

$l_{xy}(\tau)$ is the cross-correlation function of x(t) and y(t) ;

$L_{xx}(f)$, $L_{yy}(f)$ and $L_{xy}(f)$ are the power density spectra of $l_{xx}(\tau)$, $l_{yy}(\tau)$ and $l_{xy}(\tau)$, respectively;

r(t) represents the signal R and l(t) represents the signal L; and

R(f) and L(f) are the signal spectra of r(t) and l(t);

For the spectra R(f) and L(f) the following applies:

$$R(f) = H_R(f) \cdot X(f) \qquad (2)$$

$$H_R(f) = 1 - \frac{L_{xy}}{2\,L_{xx}} + \sqrt{\frac{\left(\dfrac{L_{xy}}{L_{xx}} - 2\right)^2 - 3 - \dfrac{L_{yy}}{L_{xx}} + \dfrac{4\,L_{xy}}{L_{xx}}}{4}} \qquad (3)$$

$$H_R(f) + H_L(f) = 1 \qquad (4)$$

$$L(f) = H_L(f) \cdot X(f) = (1 - H_R(f)) \cdot X(f) \qquad (5)$$

In the system and method described herein, even heavily distorted signals provide a spatial sound impression, in contrast to known systems and methods in which switching to monaural reproduction occurs. As only the sum signal L+R is used, the less distorted signal forms a basis for sound reproduction in the present system and method and the distortions occurring in the difference signal L-R do not appear in the signals R and L.

FIG. 2 shows a receiver system in which the present decoding apparatus is added to a known system with stereo/mono switching. A frequency modulation (FM) stereo receiver front end - referred to as FM front end 6 - having an input to which a frequency modulated radio frequency (RF) reception signal RS is applied from an antenna 7. FM front end 6 (detailsnot shown in the drawings) may include an RF input amplifier and tuning section amplifying the RF-FM reception signal and converting it into an intermediate frequency (IF) signal; an IF section selectively amplifying and limiting the IF-FM signal; and an FM discriminator detecting the FM modulation signal of the IF-FM signal, which is, e.g., the baseband stereo multiplex signal MPX, and supplying the same to the stereo decoder 1. The FM front end 6 also supplies a quality signal QS which may be, e.g., a measure of the signal strength of the received signal, the noise contained in the received signal and/or the like. A mono/stereo switch 8 evaluates the quality signal QS and provides, dependant thereon, a mode control signal, herein referred to as mode control signal MS, indicating that the quality of the receiving signal RS either allows stereophonic or requires monaural sound reproduction (i.e., stereo mode or mono mode). The mode control signal MS is supplied to the filter controller 5 and to a stereo matrix unit 9 that further receives the sum signal L+R and the difference signal L-R and that matrixes the sum signal L+R and the difference signal L-R into two matrix decoded signals IS1 and IS2 which are dependent on mode control signal MS in that
if MS=stereo: IS1=L and IS2=R;
if MS=mono: IS1=(L+R)/2 and IS2=(L+R)/2.

The filters 3 and 4 are controlled by the filter controller 5 dependant on the mode control signal MS such that
if MS=stereo: $H_R$ and $H_L$ are both neutral ($H_R$=1, and $H_L$=1);
if MS=mono: $H_R$ and $H_L$ are adapted to filter out R and L.

As can be readily seen, when the received RF-FM signal is of sufficient quality the system operates in a conventional manner, i.e., the stereo matrix unit 9 outputs the stereo signals L and R, which pass the filters 3, 4 unchanged. However, when the quality of the received RF-FM signal RS, as indicated by quality signal QS, deteriorates under a certain level the mono/stereo switch 8 switches from the stereo mode to the mono mode. In the mono mode, the matrix decoded signals IS1 and IS2, which are both then the sum signal L+R, are filtered with the respectively adapted transfer functions $H_R$ and $H_L$ to provide the stereo signals L and R. The transfer functions $H_R$ and $H_L$ may be changed in a hard-switching manner or a soft-switching manner (e.g., fading eventually with exponential smoothing) from $H_R$=1, $H_L$=1 to $H_R$(f), $H_L$(f) as set forth in above equation (3).

Thus, the apparatus shown in FIG. 2 decodes the sum signal L+R and the difference signal L-R using a stereo matrix, thereby providing, dependant on the quality of a signal (quality signal QS) representative of the stereo multiplex signal MPX, the two matrix-decoded signals IS1 and IS2 which are either, at higher quality, the left stereo signal L and the right stereo signal R, respectively, or, at lower quality, the sum signal L+R. If the matrix-decoded signals IS1 and IS2 are the left stereo signal L and the right stereo signal R, it filters both matrix-decoded signals according to a third transfer function, which is a unity function ($H_R$=1, $H_L$=1). If both matrix-decoded signals IS1 and IS2 are the sum signal L+R, it filters one of the matrix-decoded signals IS1 and IS2 according to the first transfer function and the other matrix-decoded signal IS2 or IS1, respectively according to the second transfer function. The apparatus may also filter the matrix-decoded signals IS1 and IS2, each with the third transfer function at lowest quality.

The system of FIG. 2 overcomes a drawback of the system shown in FIG. 1, namely that stereo signals including fast channel changes between left and right channel and/or vice versa may experience a certain delay time before the system reproduces these signals correctly. Optionally, in the system of FIG. 1 the sum signal L+R may be adequately delayed (e.g., by delay element 10) and the correlation function or power density spectrum, may be simultaneously calculated by the filter controller 5 to overcome the above-mentioned drawback.

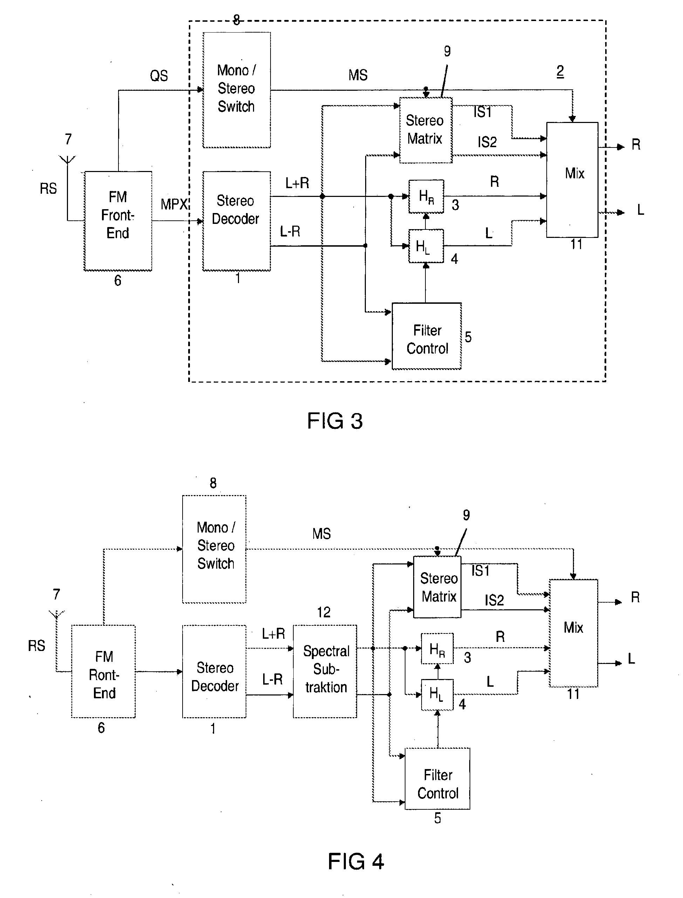

FIG. 3 shows an alternative to the system of FIG. 2. In the system of FIG. 3, the filters 3, 4 are not connected serially to (e.g. downstream of) the matrix unit 9 as in the system of FIG. 2 but are connected in parallel thereto, i.e., the filters 3, 4 are supplied with the sum signal L+R and the matrix unit 9 is supplied with the sum signal L+R and the difference signal L-R and their outputs are linked together, e.g., by a mixer unit 11. This mixer unit 11 controlled by mode control signal MS to switch or fade between the stereo signals R, L provided by the matrix unit 9 and the stereo signals R, L provided by the filters 3, 4. The mixer unit 11 may have various time constants and may use hysteresis for fading. For example, fading from matrix unit 9 to filters 3, 4 may take longer than vice versa in order to maintain a natural sound impression. Fading may start at different thresholds (hysteresis) to avoid signal fluttering due to different stereo signals L and R from the matrix unit 9 and the filters 3, 4.

For proper operation of the system described herein, it may be advisable that the sum signal L+R and the difference signal L-R are correlated. However, both signals are not correlated when no difference signal L-R can be demodulated if, e.g., the pilot signal is not detectable in the multiplex signal MPX due to bad receiving conditions or due to transmission of monaural signals. In this situation, random results would occur due to false estimates of the correlation functions but this particular problem may be solved by switching the mixer unit 11 into the mono mode or by using the output signals of the matrix unit 9, which are monaural in this case.

Thus, the apparatus shown in FIG. 3 matrix-decodes the sum signal L+R and the difference signal L-R using a stereo matrix, thereby providing the two matrix-decoded signals IS1 and IS2 which again, dependant on the quality of a signal representative of the stereo multiplex signal, are either the left stereo signal L and the right stereo signal R, respectively, or the sum signal of each L+R. Dependant on the quality of the signal (quality signal QS) representative of the stereo multiplex signal MPX, it switches or fades between the left stereo signal L and the right stereo signal R, resulting from filtering at lower quality, and the left stereo signal L and the right stereo signal R provided by matrix-decoding at higher quality. The apparatus may also switch or fade between the left stereo signal L and the right stereo signal R provided by filtering at lower quality and the sum signal L+R provided by matrix-decoding, dependant on the quality of the sum signal L+R and the difference signal L-R at lowest quality.

In the system of FIG. 4, which shows an alternative to the system of FIG. 3, an additional noise reduction unit, in the present example spectral subtraction unit 12, is connected downstream of the stereo decoder 1 and upstream of the matrix unit 9, the filter controller 5 and the filters 3, 4. As spectral subtraction reduces broadband noise, the threshold at which switching to mono mode occurs can be lowered, to the effect that even relatively poor receiving conditions still allow a sufficient stereo sound impression. Furthermore, reducing the broadband noise also reduces estimation errors when correlating the sum signal L+R and the difference signal L-R. Spectral subtraction involves correcting the sum and difference signals (L+R; L-R) with different parameters before they are input to the stereo matrix 9. The spectral subtraction is used on the sum and the difference signals by Fourier transformation of the noise signals and determining the power density minimum to determine the noise power density for generating the corrected signals. Details of the spectral subtraction method are set forth in DE 101 39 247 C2 or DE 44 45 983 A1, which are incorporated herein by reference.

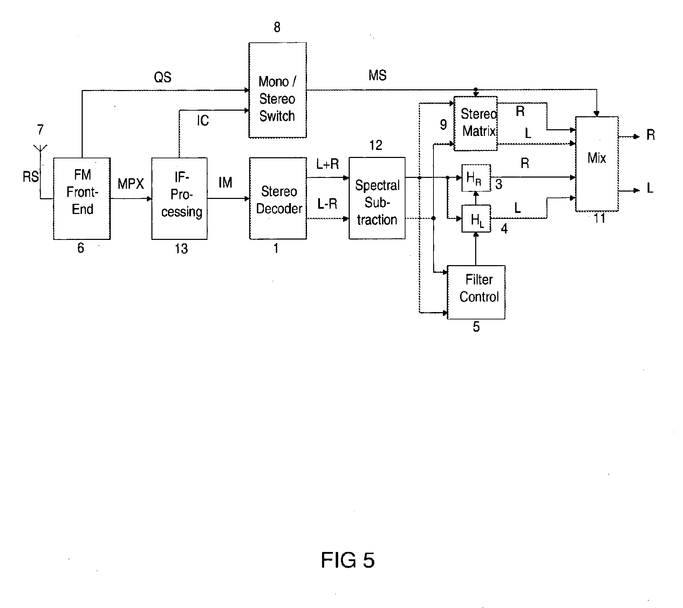

In the system of FIG. 5 an IF processing unit 13 is added to the system of FIG. 4. The IF processing unit 13, which is connected between the FM frontend 8 and the stereo decoder 1, delays the IF multiplex signal MPX and, accordingly, may have a delay line (not shown) or other adequate circuitry. The IF processing unit 13 also provides a signal IC controlling the mono/stereo switch 8 that is supplied by the field strength and a quality signal. When amply dimensioned, the delay of the multiplex signal MPX allows "estimating" stereo signal behavior and, thus, accurate switching or smooth fading between conventional stereo detection by stereo matrix 9, novel stereo detection with filters 3, 4 and mono mode.

Although the present invention has been illustrated and described with respect to several preferred embodiments thereof, various changes, omissions and additions to the form and detail thereof, may be made therein, without departing from the scope of the invention, as defined by the appended claims. In particular, the spectral subtraction unit 12 and/or the IF processing unit 13, although only shown in connection with the apparatus shown in FIG. 3, may also be applied to the apparatus of FIG. 2. Furthermore, the number of quality classes represented by the mode control signal MS, may be two (higher and lower) or three (higher, lower, the lowest) as already outlined above.

The used algorithms could also be reduced or simplified in order to reduce CPU load or in order to customize the filters to the available system resources.

Although various examples of realizing the invention have been disclosed, it will be apparent to those skilled in the art that various changes and modifications can be made which will achieve some of the advantages of the invention without departing from the scope of the invention, as defined by the appended claims. It will be obvious to those reasonably skilled in the art that other components performing the same functions may be suitably substituted. Such modifications to the inventive concept are intended to be covered by the appended claims.

## Claims

1.    A method of decoding a stereo multiplex signal (MPX) that includes a sum signal (L+R) and a difference signal (L-R) of a left stereo signal (L) and a right stereo signal (R); the method comprises
converting the stereo multiplex signal (MPX) into the sum signal (L+R) and the difference signal (L-R);
calculating, from the sum signal (L+R) and the difference signal (L-R), a first transfer function ($H_L$) and a second transfer function ($H_R$) ;

filtering the sum signal (L+R) according to the first transfer function ($H_L$) to provide the left stereo signal (L) ; and

filtering the sum signal (L+R) according to the second transfer function ($H_R$) to provide the right stereo signal (R).

**2.** The method of claim 1, in which the second transfer function ($H_R$) is

$$H_R(f) = 1 - \frac{L_{xy}}{2\ L_{xx}} + \sqrt{\frac{(\frac{L_{xy}}{L_{xx}} - 2)^2 - 3 - \frac{L_{yy}}{L_{xx}} + \frac{4\ L_{xy}}{L_{xx}}}{4}} \quad ;$$

$L_{xx}(f)$, $L_{yy}(f)$ and $L_{xy}(f)$ are the power density spectra of $I_{xx}(\tau)$, $I_{yy}(\tau)$ and $I_{xy}(\tau)$, respectively;

$I_{xx}(\tau)$ and $I_{yy}(\tau)$ are the auto-correlation functions of x(t) and y(t), respectively; and

x(t) represents the sum signal L+R and y(t) represents the difference signal L-R;

**3.** The method of claim 1 or 2, in which the first transfer function $H_L(f) = 1-H_R(f)$.

**4.** The method of one of claims 1-3, further comprising

decoding of the sum signal (L+R) and the difference signal (L-R) with a stereo matrix (9) thereby providing, dependent on the quality of a signal representative of the stereo multiplex signal (MPX), two matrix-decoded signals (IS1, IS2) which are either, at higher quality, the left stereo signal (L) and the right stereo signal (R), respectively, or, at lower quality, the sum signal of each (L+R), and

if the matrix-decoded signals (IS1, IS2) are the left stereo signal (L) and the right stereo signal (R), filtering both matrix-decoded signals (IS1, IS2) according to a third transfer function which is a unity function, and

if both matrix-decoded signals (IS1, IS2) are the sum signal (L+R), filtering one of the matrix-decoded signals (IS1, IS2) according to the first transfer function ($H_L$) and filtering the other matrix-decoded signal according to the second transfer function ($H_R$).

**5.** The method of claim 4, further comprising filtering the matrix-decoded signals (IS1, IS2) each with the third transfer function at lowest quality.

**6.** The method of one of claims 1-3, further comprising

matrix-decoding of the sum signal (L+R) and the difference signal (L-R) with a stereo matrix, thereby providing two matrix-decoded signals which, dependent on the quality of a signal (QS) representative of the stereo multiplex signal, are either the left stereo signal (L) and the right stereo signal (R), respectively, or the sum signal of each (L+R); and dependent on the quality of the signal (QS) representative of the stereo multiplex signal (MPX), switching or fading between the left stereo signal (L) and the right stereo signal (R) provided in the filtering step at lower quality and the left stereo signal (L) and the right stereo signal (R) provided in the matrix-decoding step at higher quality.

**7.** The method of claim 6, further comprising switching or fading between the left stereo signal (L) and the right stereo signal (R) provided in the filtering step at lower quality and the sum signal (L+R) provided in the matrix-decoding step, dependent on the quality of the sum signal (L+R) and the difference signal (L-R).

**8.** The method of one of claims 1-7, further comprising noise reducing of the sum signal (L+R) and the difference signal (L-R).

**9.** The method of claim 8, in which noise reducing includes spectral subtracting.

**10.** The method of one of the preceding claims, further comprising delaying of the stereo multiplex signal.

**11.** An apparatus of decoding a stereo multiplex signal (MPX) that comprises a sum signal (L+R) and a difference signal (L-R) of a left stereo signal (L) and a right stereo signal (R); the apparatus comprises

a stereo decoder (1) that converts the stereo multiplex signal into the sum signal (L+R) and the difference signal (L-R);

a first controllable filter (4) that is connected to the stereo decoder (1) and that is configured to filter the sum signal (L+R) according to a first transfer function ($H_L$) to provide the left stereo signal (L);

a second controllable filter (3) that is connected to the stereo decoder (1) and that is configured to filter the sum signal (L+R) according to a second transfer function ($H_R$) to provide the right stereo signal (R); and

a filter control unit (5)that is connected to the stereo decoder (1) and that is configured to control the first filter (4) and the second filter (3) by providing control signals representing the first transfer function ($H_L$) and the second transfer function ($H_R$) dependent on the sum signal (L+R) and difference signal (L-R).

12. The apparatus of claim 11, further comprising
a receiver front end unit (6) that is connected upstream of the stereo decoder (1) and that provides the stereo multiplex signal (MPX) and a quality signal (QS) representing the quality of the stereo multiplex signal (MPX);
a mono/stereo switch (8) that is connected to the receiver front end (6) and that evaluates the quality signal (QS) and provides, dependent thereon, a mode control signal (MS) indicating mono mode or stereo mode;
a stereo matrix unit (9) that is connected between the stereo decoder (1) and the controllable filters (3, 4) and that provides to the controllable filters (3, 4) two matrix-decoded signals (IS1, IS2) which are either, if the quality signal indicates a higher quality, the left stereo signal (L) and the right stereo signal (R), respectively, or, if the quality signal (QS9 indicates a lower quality, each are the sum signal (L+R), wherein,
the mode control signal (MS) is provided also to the filter control unit (5) to select either the first and second transfer function ($H_L$, $H_R$), respectively, or a third transfer function, which is the unity function, such that
if the matrix-decoded signals (IS1, IS2) are the left stereo signal (L) and the right stereo signal (R), both controllable filters (3, 4) are controlled such that they filter both matrix-decoded signals (IS1, IS2) according to the third transfer function, and
if both matrix-decoded signals (IS1, IS2) are the sum signal (L+R), the controllable filters (3, 4) are controlled such that one of the matrix-decoded signals (IS1, IS2) is filtered according to the first transfer function ($H_L$) and the other matrix-decoded signal (IS2, IS1) according to the second transfer function ($H_R$).

13. The apparatus of claim 11, further comprising
a receiver front end unit (6) that is connected upstream of the stereo decoder (1) and that provides the stereo multiplex signal (MPX) and a quality signal (QS) representing the quality of the stereo multiplex signal;
a mono/stereo switch (8) that is connected to the receiver front end (6) and that evaluates the quality signal (QS) and provides, dependent thereon, a mode control signal (MS) indicating mono mode or stereo mode;
a stereo matrix unit (9) that is connected downstream of the stereo decoder (1) and that provides two matrix-decoded signals (IS1, IS2) which are either, if the quality signal (QS) indicates higher quality, the left stereo signal (L) and the right stereo signal (R), respectively, or, if the quality signal (QS) indicates lower quality, the sum signal of each(L+R) ;
a signal mixer (11) that is connected to the stereo matrix unit (9) and the filters (3, 4) and that, dependent on the quality indicated by the quality signal (QS), switches or fades between the matrix-decoded signals (IS1, IS2) provided by the stereo matrix unit (9) and the filters; wherein
the mode control signal (MS) is provided also to the filter control unit (5) to select either the first transfer function ($H_L$) and second transfer function ($H_R$), respectively, or a third transfer function, which is the unity function; and
dependent on the quality, switching or fading between the left stereo signal (L) and the right stereo signal (R) provided by the filters (3, 4) if the quality signal (QS) indicates a lower quality and the left stereo signal (L) and the right stereo signal (R) provided by the matrix-decoder (9) if the quality signal (QS) indicates a higher quality.

14. The apparatus of one of claims 11-13, further comprising noise reduction unit (12) that is connected downstream of the stereo decoder (1) and that reduces noise contained in the sum signal (L+R) and the difference signal (L-R).

15. The apparatus of one of claims 12-14, further comprising an intermediate frequency (IF) processing unit (13) that is connected downstream the receiver front end unit (6)and that delays the stereo multiplex signal (MPX).

**Patentansprüche**

1. Verfahren zum Decodieren eines Stereomultiplexsignals (MPX), das ein Summensignal (L+R) und ein Differenzsignal (L-R) eines linke Stereosignals (L) und eines rechten Stereosignals (R) aufweist; das Verfahren umfasst
Umwandeln des Stereomultiplexsignals (MPX) in das Summensignal (L+R) und das Differenzsignal (L-R);
Berechnen einer ersten Transferfunktion ($H_L$) und einer zweiten Transferfunktion ($H_R$) aus dem Summensignal (L+R) und dem Differenzsignal (L-R);
Filtern des Summensignals (L+R) gemäß der ersten Transferfunktion ($H_L$), um das linke Stereosignal (L) bereitzustellen; und
Filtern des Summensignal (L+R) gemäß der zweiten Transferfunktion ($H_R$), um das rechte Stereosignal (R) bereitzustellen.

**2.** Verfahren nach Anspruch 1, wobei die zweiten Transferfunktion ($H_R$)

$$H_R(f) = 1 - \frac{L_{xy}}{2\ L_{xx}} + \sqrt{\frac{(\frac{L_{xy}}{L_{xx}} - 2)^2 - 3 - \frac{L_{yy}}{L_{xx}} + \frac{4\ L_{xy}}{L_{xx}}}{4}}$$

ist, $L_{xx}(f)$, $L_{yy}(f)$ und $L_{xy}(f)$ jeweils die Leistungsdichtespektren von $l_{xx}(\tau)$, $l_{yy}(\tau)$ bzw. $l_{xy}(\tau)$ sind; $l_{xx}(\tau)$ und $l_{yy}(\tau)$ jeweils die Autokorrelationsfunktionen von x(t) bzw. y(t) sind; und x(t) das Summensignal L+R darstellt und y(t) das Differenzsignal L-R darstellt.

**3.** Verfahren nach Anspruch 1 oder 2, wobei die erste Transferfunktion $H_L(f) = l-H_R(f)$.

**4.** Verfahren nach einem der Ansprüche 1-3, ferner umfassend
Decodieren des Summensignals (L+R) und des Differenzsignals (L-R) mit einer Stereomatrix (9) und dadurch Bereitstellen, abhängig von der Qualität eines Signals, das das Stereomultiplexsignal (MPX) darstellt, von zwei matrixdecodierten Signalen (IS1, IS2), die entweder, bei höherer Qualität, jeweils das linke Stereosignal (L) bzw. das rechte Stereosignal (R) sind, oder, bei niedrigerer Qualität, jeweils das Summensignal von (L+R) sind, und wenn die matrixdecodierte Signale (IS1, IS2) das linke Stereosignal (L) und das rechte Stereosignal (R) sind, Filtern beider matrixdecodierter Signale (IS1, IS2) gemäß einer dritten Transferfunktion, die eine Einheitlichkeitsfunktion ist, und
wenn die beiden matrixdecodierten Signale (IS1, IS2) das Summensignal (L+R) sind, Filtern von einem der matrixdecodierten Signale (IS1, IS2) gemäß der ersten Transferfunktion ($H_L$) und Filtern des anderen matrixdecodierten Signals gemäß der zweiten Transferfunktion ($H_R$).

**5.** Verfahren nach Anspruch 4, ferner umfassend Filtern der matrixdecodierten Signale (IS1, IS2) jeweils mit der dritten Transferfunktion bei niedrigster Qualität.

**6.** Verfahren nach einem der Ansprüche 1-3, ferner umfassend
Matrixdecodieren des Summensignals (L+R) und des Differenzsignals (L-R) mit einer Stereomatrix, und dadurch Bereitstellen von zwei matrixdecodierten Signalen, die, abhängig von der Qualität eines Signals (QS), das das Stereomultiplexsignal darstellt, jeweils entweder das linke Stereosignal (L) und das rechte Stereosignal (R) oder jeweils das Summensignal von (L+R) sind; und
abhängig von der Qualität des Signals (QS), das das Stereomultiplexsignal (MPX) darstellt, Umschalten oder Überblenden zwischen dem linken Stereosignal (L) und dem rechten Stereosignal (R), die in dem Schritt des Filterns bei niedrigerer Qualität bereitgestellt werden, und dem linken Stereosignal (L) und dem rechten Stereosignal (R), die in dem Schritt des Matrixdecodierens bei höherer Qualität bereitgestellt werden.

**7.** Verfahren nach Anspruch 6, ferner umfassend Umschalten oder Überblenden zwischen dem linken Stereosignal (L) und dem rechten Stereosignal (R), die in dem Schritt des Filterns bei niedrigerer Qualität bereitgestellt werden, und dem Summensignal (L+R), das in dem Schritt des Matrixdecodierens bereitgestellt wird, abhängig von der Qualität des Summensignals (L+R) und des Differenzsignals (L-R).

**8.** Verfahren nach einem der Ansprüche 1-7, ferner umfassend Rauschreduzieren des Summensignals (L+R) und des Differenzsignals (L-R).

**9.** Verfahren nach Anspruch 8, wobei das Rauschreduzieren spektrales Subtrahieren einschließt.

**10.** Verfahren nach einem der vorangehenden Ansprüche, ferner umfassend Verzögern des Stereomultiplexsignals.

**11.** Vorrichtung zum Decodieren eines Stereomultiplexsignals (MPX), das ein Summensignal (L+R) und ein Differenzsignal (L-R) eines linke Stereosignals (L) und eines rechten Stereosignals (R) umfasst; die Vorrichtung umfasst einen Stereodecodierer (1), der das Stereomultiplexsignal in das Summensignal (L+R) und das Differenzsignal (L-R) umwandelt;
einen ersten steuerbaren Filter (4), der mit dem Stereodecodierer (1) verbunden ist und dazu konfiguriert ist, das Summensignal (L+R) gemäß einer ersten Transferfunktion ($H_L$) zu filtern, um das linke Stereosignal (L) bereitzustellen;
einen zweiten steuerbaren Filter (3), der mit dem Stereodecodierer (1) verbunden ist und dazu konfiguriert ist, das Summensignal (L+R) gemäß einer zweiten Transferfunktion (H$_R$) zu filtern, um das rechte Stereosignal (R) bereitzustellen; und

eine Filtersteuereinheit (5), die mit dem Stereodecodierer (1) verbunden ist und dazu konfiguriert ist, den ersten Filter (4) und den zweiten Filter (3) zu steuern, indem Steuersignale bereitgestellt werden, die abhängig von dem Summensignal (L+R) und dem Differenzsignal (L-R) die erste Transferfunktion (H$_L$) und die zweite Transferfunktion (H$_R$) darstellen.

**12.** Vorrichtung nach Anspruch 11, ferner umfassend

eine Empfänger-Frontend-Einheit (6), die vorgeschaltet zum Stereodecodierer (1) verbunden ist und das Stereomultiplexsignal (MPX) und ein Qualitätssignal (QS) bereitstellt, das die Qualität des Stereomultiplexsignals (MPX) darstellt;

einen Mono/Stereo-Schalter (8), der mit dem Empfänger-Frontend (6) verbunden ist und das Qualitätssignal (QS) bewertet und abhängig davon ein Modussteuersignal (MS) bereitstellt, das einen Monomodus oder einen Stereomodus angibt;

eine Stereomatrixeinheit (9), die zwischen dem Stereodecodierer (1) und den steuerbaren Filtern (3, 4) verbunden ist und an die steuerbaren Filter (3, 4) zwei matrixdecodierte Signale (IS1, IS2) bereitstellt, die entweder, wenn das Qualitätssignal eine höhere Qualität angibt, jeweils das linke Stereosignal (L) bzw. das rechte Stereosignal (R) sind, oder, wenn das Qualitätssignal (QS) eine niedrigere Qualität angibt, jeweils das Summensignal (L+R) sind, wobei das Modussteuersignal (MS) auch an die Filtersteuereinheit (5) bereitgestellt wird, um entweder jeweils die erste und zweite Transferfunktion (H$_L$, H$_R$) oder eine dritte Transferfunktion auszuwählen, die die Einheitsfunktion ist, derart, dass,

wenn die matrixdecodierte Signale (IS1, IS2) das linke Stereosignal (L) und das rechte Stereosignal (R) sind, beide steuerbaren Filter (3, 4) derart gesteuert werden, dass beide matrixdecodierten Signale (IS1, IS2) gemäß der dritten Transferfunktion gefiltert werden, und

wenn die beiden matrixdecodierten Signale (IS1, IS2) das Summensignal (L+R) sind, die steuerbaren Filter (3, 4) derart gesteuert werden, dass eins der matrixdecodierten Signale (IS1, IS2) gemäß der ersten Transferfunktion (H$_L$) gefiltert wird und das andere matrixdecodierte Signal (IS2, IS1) gemäß der zweiten Transferfunktion (H$_R$) gefiltert wird.

**13.** Vorrichtung nach Anspruch 11, ferner umfassend

eine Empfänger-Frontend-Einheit (6), die vorgeschaltet zum Stereodecodierer (1) verbunden ist und das Stereomultiplexsignal (MPX) und ein Qualitätssignal (QS) bereitstellt, das die Qualität des Stereomultiplexsignals darstellt;

einen Mono/Stereo-Schalter (8), der mit dem Empfänger-Frontend (6) verbunden ist und das Qualitätssignal (QS) bewertet und abhängig davon ein Modussteuersignal (MS) bereitstellt, das einen Monomodus oder einen Stereomodus angibt;

eine Stereomatrixeinheit (9), die nachgeschaltet zum Stereodecodierer (1) verbunden ist und zwei matrixdecodierte Signale (IS1, IS2) bereitstellt, die entweder, wenn das Qualitätssignal (QS) eine höhere Qualität angibt, jeweils das linke Stereosignal (L) bzw. das rechte Stereosignal (R) sind, oder, wenn das Qualitätssignal (QS) eine niedrigere Qualität angibt, jeweils das Summensignal von (L+R) sind;

einen Signalmischer (11), der mit der Stereomatrixeinheit (9) und den Filtern (3, 4) verbunden ist und abhängig von der Qualität, die von dem Qualitätssignal (QS) angegeben wird, zwischen den matrixdecodierten Signalen (IS1, IS2), die von der Stereomatrixeinheit (9) und den Filtern bereitgestellt werden, umschaltet oder überblendet; wobei das Modussteuersignal (MS) auch an die Filtersteuereinheit (5) bereitgestellt wird, um entweder jeweils die erste Transferfunktion (H$_L$) und die zweite Transferfunktion (H$_R$) oder eine dritte Transferfunktion auszuwählen, die die Einheitsfunktion ist; und

abhängig von der Qualität, Umschalten oder Überblenden zwischen dem linken Stereosignal (L) und dem rechten Stereosignal (R), die von den Filtern (3, 4) bereitgestellt werden, wenn das Qualitätssignal (QS) eine niedrigere Qualität angibt, und dem linken Stereosignal (L) und dem rechten Stereosignal (R), die von dem Matrixdecodierer (9) bereitgestellt werden, wenn das Qualitätssignal (QS) eine höhere Qualität angibt.

**14.** Vorrichtung nach einem der Ansprüche 11-13, ferner umfassend eine Rauschreduzierungseinheit (12), die nachgeschaltet zum Stereodecodierer (1) verbunden ist und Rauschen im Summensignal (L+R) und im Differenzsignal (L-R) reduziert.

**15.** Vorrichtung nach einem der Ansprüche 12-14, ferner umfassend eine Zwischenfrequenz(IF)-Verarbeitungseinheit (13), die nachgeschaltet zur Empfänger-Frontend-Einheit (6) verbunden ist und das Stereomultiplexsignal (MPX) verzögert.

**Revendications**

1. Procédé de décodage d'un signal stéréo multiplex (MPX) qui comprend un signal de somme (L+R) et un signal de différence (L-R) d'un signal stéréo gauche (L) et d'un signal stéréo droit (R) ; le procédé comprenant

   la conversion du signal stéréo multiplex (MPX) pour obtenir le signal de somme (L+R) et le signal de différence (L-R) ;

   le calcul, à partir du signal de somme (L+R) et du signal de différence (L-R), d'une première fonction de transfert ($H_L$) et d'une deuxième fonction de transfert ($H_R$) ;

   le filtrage du signal de somme (L+R) conformément à la première fonction de transfert ($H_L$) pour obtenir le signal stéréo gauche (L) ; et

   le filtrage du signal de somme (L+R) conformément à la deuxième fonction de transfert ($H_R$) pour obtenir le signal stéréo droit (R).

2. Procédé selon la revendication 1, dans lequel la deuxième fonction de transfert ($H_R$) est

$$H_R(f) = 1 - \frac{L_{xy}}{2\ L_{xx}} + \sqrt{\frac{(\frac{L_{xy}}{L_{xx}} - 2)^2 - 3 - \frac{L_{yy}}{L_{xx}} + \frac{4\ L_{xy}}{L_{xx}}}{4}}\ ;$$

   $L_{xx}(f)$, $L_{yy}(f)$ et $L_{xy}(f)$ sont les spectres de densité de puissance de $I_{xx}(\tau)$, $I_{yy}(\tau)$ et $I_{xy}(\tau)$, respectivement ;

   $I_{xx}(\tau)$ et $I_{yy}(\tau)$ sont les fonctions d'autocorrélation de x(t) et y(t), respectivement ; et

   x(t) représente le signal de somme L+R et y(t) représente le signal de différence L-R.

3. Procédé selon la revendication 1 ou 2, dans lequel la première fonction de transfert $(H_L)(f) = 1-H_R(f)$.

4. Procédé selon l'une quelconque des revendications 1 à 3, comprenant en outre

   le décodage du signal de somme (L+R) et du signal de différence (L-R) avec une matrice stéréo (9) pour ainsi obtenir, en fonction de la qualité d'un signal représentant le signal stéréo multiplex (MPX), deux signaux décodés par matrice (IS1, IS2) qui sont soit, à une qualité supérieure, le signal stéréo gauche (L) et le signal stéréo droit (R), respectivement, soit, à une qualité inférieure, le signal de somme de chacun (L+R), et

   si les signaux décodés par matrice (IS1, IS2) sont le signal stéréo gauche (L) et le signal stéréo droit (R), le filtrage des deux signaux décodés par matrice (IS1, IS2) conformément à une troisième fonction de transfert qui est une fonction d'unité, et

   si les deux signaux décodés par matrice (IS1, IS2) sont le signal de somme (L+R), le filtrage d'un des signaux décodés par matrice (IS1, IS2) conformément à la première fonction de transfert ($H_L$) et le filtrage de l'autre signal décodé par matrice conformément à la deuxième fonction de transfert ($H_R$).

5. Procédé selon la revendication 4, comprenant en outre le filtrage des signaux décodés par matrice (IS1, IS2), chacun avec la troisième fonction de transfert à une qualité inférieure.

6. Procédé selon l'une quelconque des revendications 1 à 3, comprenant en outre

   le décodage par matrice du signal de somme (L+R) et du signal de différence (L-R) avec une matrice stéréo, pour ainsi obtenir deux signaux décodés par matrice qui, en fonction de la qualité d'un signal (QS) représentant le signal stéréo multiplex, sont soit le signal stéréo gauche (L) et le signal stéréo droit (R), respectivement, soit le signal de somme de chacun (L+R) ; et

   en fonction de la qualité du signal (QS) représentant le signal stéréo multiplex (MPX), l'échange ou le passage progressif entre le signal stéréo gauche (L) et le signal stéréo droit (R) obtenus dans l'étape de filtrage à la qualité inférieure et le signal stéréo gauche (L) et le signal stéréo droit (R) obtenus dans l'étape de décodage par matrice à la qualité supérieure.

7. Procédé selon la revendication 6, comprenant en outre l'échange ou le passage progressif entre le signal stéréo gauche (L) et le signal stéréo droit (R) obtenus dans l'étape de filtrage à la qualité inférieure et le signal de somme (L+R) obtenu dans l'étape de décodage par matrice, en fonction de la qualité du signal de somme (L+R) et du signal de différence (L-R).

8. Procédé selon l'une quelconque des revendications 1 à 7, comprenant en outre la réduction du bruit du signal de somme (L+R) et du signal de différence (L-R).

9. Procédé selon la revendication 8, dans lequel la réduction du bruit comprend une soustraction spectrale.

10. Procédé selon l'une quelconque des revendications précédentes, comprenant en outre le retardement du signal stéréo multiplex.

11. Appareil de décodage d'un signal stéréo multiplex (MPX) qui comprend un signal de somme (L+R) et un signal de différence (L-R) d'un signal stéréo gauche (L) et d'un signal stéréo droit (R) ; l'appareil comprenant
un décodeur stéréo (1) qui convertit le signal stéréo multiplex pour obtenir le signal de somme (L+R) et le signal de différence (L-R) ;
un premier filtre contrôlable (4) qui est connecté au décodeur stéréo (1) et qui est conçu pour filtrer le signal de somme (L+R) conformément à une première fonction de transfert ($H_L$) pour obtenir le signal stéréo gauche (L) ;
un second filtre contrôlable (3) qui est connecté au décodeur stéréo (1) et qui est conçu pour filtrer le signal de somme (L+R) conformément à une deuxième fonction de transfert ($H_R$) pour obtenir le signal stéréo droit (R) ; et
une unité de commande de filtre (5) qui est connectée au décodeur stéréo (1) et qui est conçue pour commander le premier filtre (4) et le second filtre (3) en fournissant des signaux de commande représentant la première fonction de transfert ($H_L$) et la deuxième fonction de transfert ($H_R$) en fonction du signal de somme (L+R) et du signal de différence (L-R).

12. Appareil selon la revendication 11, comprenant en outre
une unité à étage d'entrée de récepteur (6) qui est connectée en amont du décodeur stéréo (1) et qui fournit le signal stéréo multiplex (MPX) et un signal de qualité (QS) représentant la qualité du signal stéréo multiplex (MPX) ;
un commutateur mono/stéréo (8) qui est connecté à l'étage d'entrée de récepteur (6) et qui évalue le signal de qualité (QS) et fournit un signal de commande de mode (MS), qui dépend du signal de qualité, indiquant un mode mono ou un mode stéréo ;
une unité de matrice stéréo (9) qui est connectée entre le décodeur stéréo (1) et les filtres contrôlables (3, 4) et qui fournit aux filtres contrôlables (3, 4) deux signaux décodés par matrice (IS1, IS2) qui sont, si le signal de qualité indique une qualité supérieure, le signal stéréo gauche (L) et le signal stéréo droit (R) respectivement, ou si le signal de qualité (QS) indique une qualité inférieure, chacun le signal de somme (L+R), dans lequel,
le signal de commande mode (MS) est également fourni à l'unité de commande filtre (5) pour sélectionner soit la première et la deuxième fonction de transfert ($H_L$, $H_R$), respectivement, soit une troisième fonction de transfert qui est la fonction d'unité, de façon que
si les signaux décodés par matrice (IS1, IS2) sont le signal stéréo gauche (L) et le signal stéréo droit (R), les deux filtres contrôlables (3, 4) soient commandés pour qu'ils filtrent les deux signaux décodés par matrice (IS1, IS2) conformément à la troisième fonction de transfert, et
si les deux signaux décodés par matrice (IS1, IS2) sont le signal de somme (L+R), les filtres contrôlables (3, 4) soient commandés pour qu'un des signaux décodés par matrice (IS1, IS2) soit filtré conformément à la première fonction de transfert ($H_L$) et que l'autre signal décodé par matrice (IS2, IS1) conformément à la deuxième fonction de transfert ($H_R$).

13. Appareil selon la revendication 11, comprenant en outre
une unité à étage d'entrée de récepteur (6) qui est connectée en amont du décodeur stéréo (1) et qui fournit le signal stéréo multiplex (MPX) et un signal de qualité (QS) représentant la qualité du signal stéréo multiplex ;
un commutateur mono/stéréo (8) qui est connecté à l'étage d'entrée de récepteur (6) et qui évalue le signal de qualité (QS) et fournit un signal de commande de mode (MS), qui dépend du signal de qualité, indiquant un mode mono ou un mode stéréo ;
une unité de matrice stéréo (9) qui est connectée en aval du décodeur stéréo (1) et qui fournit deux signaux décodés par matrice (IS1, IS2) qui sont, si le signal de qualité (QS) indique une qualité supérieure, le signal stéréo gauche (L) et le signal stéréo droit (R) respectivement, ou si le signal de qualité (QS) indique une qualité inférieure, le signal de somme de chacun (L+R) ;
un mélangeur de signal (11) qui est connecté à l'unité de matrice stéréo (9) et aux filtres (3, 4) et qui, en fonction de la qualité indiquée par le signal de qualité (QS), échange ou effectue un passage progressif entre les signaux décodés par matrice (IS1, IS2) fournis par l'unité de matrice stéréo (9) et les filtres ; dans lequel
le signal de commande mode (MS) est également fourni à l'unité de commande filtre (5) pour sélectionner soit la première ($H_L$) et la deuxième fonction de transfert ($H_R$), respectivement, soit une troisième fonction de transfert qui est la fonction d'unité ; et
en fonction de la qualité, l'échange ou le passage progressif entre le signal stéréo gauche (L) et le signal stéréo droit (R) fournis par les filtres (3, 4) si le signal de qualité (QS) indique une qualité inférieure et le signal stéréo gauche (L) et le signal stéréo droit (R) fournis par le décodeur par matrice (9) si le signal de qualité (QS) indique une qualité supérieure.

14. Appareil selon l'une quelconque des revendications 11 à 13, comprenant en outre une unité de réduction de bruit (12) qui est connectée en aval du décodeur stéréo (1) et qui réduit le bruit contenu dans le signal de somme (L+R) et le signal de différence (L-R).

15. Appareil selon l'une quelconque des revendications 12 à 14, comprenant en outre une unité de traitement (13) de fréquence intermédiaire (FI) qui est connectée en aval de l'unité à étage d'entrée de récepteur (6) et qui retarde le signal stéréo multiplex (MPX).

EP 2 552 027 B1

FIG 1

FIG 2

13

FIG 3

FIG 4

FIG 5

**EP 2 552 027 B1**

## REFERENCES CITED IN THE DESCRIPTION

**Patent documents cited in the description**

- WO 2008087577 A
- DE 10139247 C2
- DE 4445983 A1